# EUROPÄISCHE PATENTSCHRIFT

(11) **EP 1 277 980 B1**
(45) Veröffentlichungstag und Bekanntmachung des Hinweises auf die Patenterteilung: **10.02.2010**
(21) Anmeldenummer: 02015177.5
(22) Anmeldetag: 08.07.2002
(51) Int. Cl.: F16D 3/40

(54) **Gelenkwellenverbindung mit integrierter Beugenwinkelbegrenzung**
Universal joint with integrated limited articulation
Joint homocinétique avec limitation intégrée d'angle d'articulation

(30) Priorität: 09.07.2001 DE 10132542
(43) Veröffentlichungstag der Anmeldung: 22.01.2003
(73) Patentinhaber: Voith Turbo GmbH & Co. KG, 89522 Heidenheim (DE)
(72) Erfinder: Grawenhof, Peter, 89547 Dettingen (DE)
(74) Vertreter: Dr. Weitzel & Partner

(56) Entgegenhaltungen:
- DE-B- 2 825 556
- DE-B- 2 902 226
- US-A- 4 529 392

## Beschreibung

Die Erfindung betrifft eine Gelenkwellenverbindung mit integrierbarer Beugewinkelbegrenzung, im einzelnen mit den Merkmalen aus dem Oberbegriff des Anspruchs 1.

Gelerikwelleriverbindungen mit Beugewinkelbegrenzung sind beispielsweise aus den nachfolgenden genannten Druckschriften vorbekannt:
DE 28 25 556
DE 197 45 199 C1

Das Dokument DE 29 02 226 beschreibt eine Kreuzgelenkkupplung zum Verbinden zweier drehbar gelagerter Wellen mittels einem Zapfenkreuz. Dabei ist eine Kupplungshälfte mittels einer lösbaren Kupplung wahlweise mit einem daran anschließenden Maschinenteil verbindbar oder davon lösbar. Weiterhin ist ein Tragerohr vorgesehen, welches durch das Zapfenkreuz hindurchgeführt ist und in seinem Inneren einen axial verschiebbaren Bolzen führt, Der Bolzen umfasst eine Haltescheibe, die gegen eine Haltefläche der anderen Kupplungshälfte anpressbar ist, um die Schwenkbarkeit der beiden Kupplungshälften gegeneinander zu unterdrücken. Die Schwenkbarkeit ist jedoch nur so lange unterdrückt, so lange die lösbare Kupplung ausgerückt ist.

US 4,529,392 beschreibt eine Gelenkwelle mit zwei kardanischen Gelenken, je umfassend zwei Kupplungshälften mit dazwischen liegendem Zapfenkreuz, Es ist ein axial stufenlos verstellbarer, radial außerhalb des Kreuzgelenks befindlicher Anschlag zum Begrenzen des Beugungswinkels zwischen zwei Kupplungshälften vorgesehen.

Bei der Ausführung gemäß DE 197 45 199 C1 handelt es sich um eine Gelenkwelle zum Antrieb einer Walze eines Walzwerkes, Diese umfaßt eine Kupplungehülse, ferner ein Kreuzgelenk mit einer ersten Gelenkgabel und einer zweiten Gelenkgabel, welche um den Schnittpunkt zwischen den beiden Zapfenachsen des Zapfenkreuzes winkelbeweglich zueinander sind. Um das Kuppeln der Kupplungshülse mit einem Kupplungszapfen durch Eintauchen in die Aufnahmebohrung der Kupplungshülse zu erleichtern, kann die Winkeibeweglichkeit durch einen Hahezapfen und einen Stellbolzen blockiert werden. Dazu wird der Haltezapfen durch eine Federeinrichtung in eine Haltebohrung einer Brücke verlagert, welche die beiden Gabelarme der ersten Gelenkgabel miteinander verbindet. Der Haltezapfen ist mit der zweiten Gelenkgabel verbunden, Beide sind somit unbeweglich zueinander. Die Betätigung des Haltezapfens im Sinne einer Verlagerung außer Kontakt zur Haltebohrung erfolgt über einen Stellbolzen, der von dem in der Aufnahmebohrung aufzunehmenden Kupplungszapfen beaufschlagt wird. Durch Vorsehung eines Haltezapfens und eines davon getrennten Stellzapfens wird ein günstigerer Beugewinkel zwischen den beiden Gelankgabeln beziehungsweise Wellensträngen erreichbar. Diese Ausführung baut auf dem Prinzip Reibschluß auf. Besonders nachteilig sind die dabei erforderlichen sehr hohlen Kräfte sowie der in der Regel nur sehr ungenau beziehungsweise bei jeder Betätigung der Beugewinkelbegtenzung neu zu ermittelnde Haftreibbeiwert µ, welcher durch Verschmutzung, zum Beispiel Öl, Fett oder Farbe auf unter 30 Prozent reduziert werden kann.

Außerdem gestalten sich die Treffer, das heißt die Walzenanschlußnaben immer aufwendiger, aufgrund von Ausführungen mit Verschleißplatten, Zentrierringen, Einfahrhilfen, Schnappverschlüssen und so weiter, was zu einer Erhöhung des Gewichtes führt. Die über den Reibschluß erzeugte Haltekraft reicht dann in den meisten Fällen nicht mehr aus.

Der Erfindung liegt daher die Aufgabe zugrunde, eine Gelenkwellenverbindung mit Beugewinkelbegrenzung, insbesondere eine Vorrichtung zur Verbesserung des Walzenwechsels in einem Kreuzgelenk zu entwickeln, welche die genannten Nachteile vermeidet und insbesondere für schwere Kreuzgelenke zum Einsatz gelangen kann. Der Aufbau soll sich dabei durch einen geringen konstruktiven und fertigungstechnischen Aufwand auszeichnen.

Die erfindungsgemäße Lösung ist durch die Merkmale des Anspruchs 1 charakterisiert. Vorteilhafte Ausgestaltungen sind in den Unteransprüchen beschrieben.

Die Gelenkwellenverbindung zwischen zwei Wellenstränge, einem ersten Wellenstrang und einem zweiten Wellenstrang mit Beugewinkelbegrenzung umfaßt eine jedem Wellenstrang zugeordnete Gelenkgabel zur Lagerung des Zapfenkreuzes. Die Gelenkgabel weist ein Lagerteil und einen Fußteil auf, wobei die Gelenkgabel einteilig oder aus mehreren Bauteilen bestehen kann, welche zur Baueinheit Gelenkgabel zusammenfaßbar sind. Die Vorrichtung zur Begrenzung des Beugewinkels umfaßt eine Halteeinrichtung und eine Stelleinrichtung. Die Halteeinrichtung umfaßt erfindungsgemäß einen senkrecht zum Schnittpunkt der Zapfenachsen des Zapfenkreuzes im Zapfenkreuz gelagerten Stempel, welcher formschlüssig mit einer, an einem ersten der beiden Flanschmitnehmer angeordneten Gegenfläche in Wirkverbindung tritt und eine Lagefixierung in axialer und radialer Richtung ermöglicht. Die Stelleinrichtung ist an der zweiten anderen Gelenkgabelhälfte, das heißt dem anderen Flanschmitnehmer gelagert.

Die erfindungsgemäße Lösung baut hauptsächlich auf dem Prinzip Formschluß auf, wobei die zur Erzeugung erforderlichen Kräfte auch mittels kleinerer Stelleinrichtungen bereitgestellt werden können. Dies bietet den Vorteil, daß diese Vorrichtung auch für schwere Gelenkwellen gut einsetzbar ist, da die erforderlichen Anpreßkräfte nicht so hoch sein müssen.

Bezüglich der konkreten Ausführung der Halteeinrichtung und der Stelleinrichtung bestehen eine Mehrzahl von Möglichkeiten. Vorzugsweise umfaßt die Halteeinrichtung einen Stempel, umfassend ein Bolzenelement, welches im Zapfenkreuz führbar gelagert ist und fest mit einem Stempelelement verbunden ist, welches derart ausgestaltet ist, daß dieses eine formschlüssige Verbindung mit der Gegenfläche eingehen kann. Die formschlüssige Verbindung wird dabei durch die zueinander komplementäre Gestaltung der Gegenflächen mit ausgeführter Verzahnung erzielt. Bezüglich der konkreten Ausgestaltung der Gegenfläche und der zu dieser gewandten Fläche des Stempelelementes des Stempels bestehen eine Mehrzahl von Möglichkeiten. In einer besonders vorteilhaften Ausgestaltung wird das Stempelelement mit einer Klemm- oder Krallenfläche ausgeführt, die konkav ausgestaltet ist. Die Gegenfläche am Flanschmitnehmer wird konvex ausgeführt, wobei diese über den im Zapfenkreuz verschiebbar und mittels Vorspannung im Zapfenkreuz gelagerten und abgedichteten Bolzenelement mit dem Stempel formschlüssig verbunden wird. Die Krümmungsflächen am Stempelelement und der Gegenfläche sind zueinander um 90 Grad gedreht angeordnet. Der Formschluß wird über eine Profilverbindung realisiert, wobei vorzugsweise eine Verzahnung gewählt wird. Die Verzahnung beziehungsweise das Profil kann dabei durch verschiedene Verfahren hergestellt weren, beispielsweise Fräsen, Hobeln, Schlagen, Errodieren, Laserschneiden, Aufdetonieren.

Bei Ausführungen mit Verzahnung kann diese sowohl als Geradverzahnung als auch Schrägverzahnung ausgeführt sein. Vorzugsweise wird jedoch eine Geradverzahnung gewählt.

Unter einem weiteren Aspekt der Erfindung besteht die Möglichkeit, die Gegenfläche und die dazu komplementäre Fläche am Stempelelement mit einer Verzahnung zu versehen, welche unterschiedliche Verzahnungsbereiche aufweist. Diese Verzahnungsbereiche sind dadurch charakterisiert, daß die Flankenlinien an die Verzahnungen in jedem Bereich zwischen den einzelnen Bereichen in einem Winkel zueinander stehen. Diese Lösung ermöglicht eine sichere Zentrierung zwischen Stempel und Gegenfläche, jedoch immer nur unter der Voraussetzung, daß diese Flächenbereiche zueinander komplementär sowohl an der Gegenfläche als auch am Stempelelement vorgesehen sind.

Gemäß einer Weiterentwicklung der erfindungsgemäßen Lösung ist die Gegenfläche im Bereich des Fußteiles eines Flanschmitnehmers angeordnet und ist entweder in das Fußteil direkt eingearbeitet oder wird gemäß einer besonders vorteilhaften Ausgestaltung von einem separaten Bauelement, welches lösbar mit dem Flanschmitnehmer verbunden ist, gebildet. Dies ermöglicht es, unterschiedliche Paarungen fürden Formschluß bezüglich der Werkstoffauswahl zu schaffen. Vorzugsweise wird dabei das die Gegenfläche tragende Bauteil das Verschleißelement bilden, welches ausgetauscht werden kann. Dieses ist dabei durch eine geringere Härte bzw. Festigkeit als das Stempelelement charakterisiert.

Vorzugsweise sind alle Elemente zumindest des Stempels gegen Verdrehung gesichert. Um in jedem Zustand, auch im demontierten Zustand eine Fixierung des Stempels zu ermöglichen, ist dieser vorgespannt im Zapfenkreuz gelagert. Dies wird über die Ausgestaltung des Bolzenelementes der Stempeleinrichtung aus einem ersten, im Zapfenkreuz geführten Bolzenteil und eines zweiten, fest mit dem ersten Bolzenteil verbundenen Bolzenteils realisiert, wobei das zweite Bolzenteil einen größeren Durchmesser aufweist und fest mit dem ersten Bolzenteil verbunden ist, wobei das zweite Bolzenteil sich über eine Federeinrichtung an der von der Gegenfläche weggerichteten Stirnseite des Zapfenkreuzes abstützt. Auch das Stempelelement weist dabei einen größeren Durchmesser als das erste Bolzenteil auf. Dadurch kann eine Anschlagswirkung an den Stirnseiten des Zapfenkreuzes realisiert werden.

Die Stelleinrichtung umfaßt im einfachsten Fall eine Zylinder-/Kolbeneinrichtung. Sie kann pneumatisch oder hydraulisch oder anderweitig betätigt werden. Vorzugsweise ist der Zylinderkolbeneinrichtung eine Druckmittelquelle zugeordnet, die mindestens einen Druckraum zur Beaufschlagung mindestens einer Kolbenfläche des Kolbenelementes der Zylinderkolbeneinheit mit Druckmittel versorgt. Die Druckmittelquelle selbst kann dabei außerhalb der Gelenkwelle beziehungsweise des Wellenstranges angeordnet sein oder aber an diesem angebracht werden oder bei Ausnutzung anderer Systeme bei spezieller Gestaltung der Wellenstränge auch durch die gemeinsame Nutzung eines anderen Druckmittelvorrates gebildet werden.

Bei Ausführung hydraulisch oder pneumatisch betätigter Stelleinrichtungen erstreckt sich dabei die Verbindungsleitung vorzugsweise durch den Fußteil des Flanschmitnehmers, in welchem die Stelleinrichtung gelagert ist. Die Ankopplung an eine Druckmittelquelle erfolgt dabei im Bereich des Außenumfanges des Wellenstranges beziehungsweise der Gelenkwelle.

Die erfindungsgemäße Lösung ist für jegliche Art von Flanschmitnehmern mit Wellensträngen geeignet. Diese bedarf lediglich entsprechender Modifikationen entsprechend der Ausgestaltung beziehungsweise zur Verfügung stehenden baulichen Gegebenheiten bei Gelenkwellen.

Die erfindungsgemäße Lösung wird nachfolgend anhand von Figuren erläutert. Darin ist im einzelnen folgendes dargestellt:
- Figur 1: verdeutlicht in schematischer Darstellung den Grundaufbau einer erfindungsgemäß gestalteten Gelenkwellenverbindung mit Beugewellenbegrenzung gemäß einer besonders vorteilhaften Ausgestaltung;
- Figur 2: verdeutlicht eine Ausführung gemäß Figur 1 mit anderer Ausgestaltung der miteinander formschlüssig zu koppelnden Flächen am Stempelelement und der Gegenfläche.

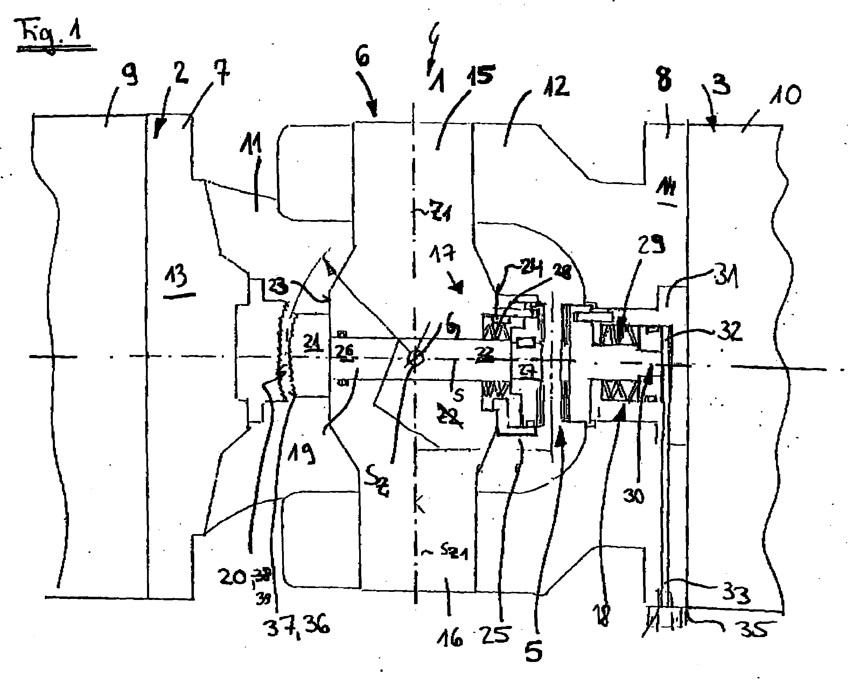

Die Figur 1 verdeutlicht in vereinfachter Darstellung anhand eines Ausschnittes aus einer Gelenkwellenverbindung 1 zwischen zwei Wellensträngen, insbesondere Gelenkwellen, einer ersten Gelenkwelle 2 und einer zweiten Gelenkwelle 3 über ein Kreuzgelenk 4 im Axialschnitt eine erfindungsgemäß vorgesehene Vorrichtung 5 zur Beugewinkelbegrenzung. Das Kreuzgelenk 4 umfaßt ein Zapfenkreuz 6, welche mit jeweils in um 90 in Umfangsrichtung zueinander versetzt angeordneten Flanschmitnehmern 7 bzw. 8 der einzelnen Gelenkwellen - erste Gelenkwelle 2 und zweite Gelenkwelle 3 - gelagert sind. Dabei ist der erste Flanschmitnehmer 7 der ersten Gelenkwelle 2 zugeordnet und mit einem, hier lediglich nur schematisch angedeuteten Wellenstrang 9 zur ersten Gelenkwelle zusammengefaßt. Der zweite Flanschmitnehmer 8 bildet mit einem zweiten Wellenstrang 10 die zweite Gelenkwelle 3. Bezüglich der Kopplung zwischen den Wellensträngen 9 und 10 und den Flanschmitnehmern 7 und 8 bestehen eine Vielzahl von Möglichkeiten, die im Tätigkeitsbereich des zuständigen Fachmanns liegen, weshalb hier im einzelnen nicht darauf eingegangen wird. Jeder Flanschmitnehmer 7 bzw. 8 fungiert als Gelenkgabel, welche einteilig oder mehrteilig ausgeführt sein kann, umfassend einen Lagerteil 11 für den Flanschmitnehmer 7 und einen Lagerteil 12 für den Flanschmitnehmer 8 sowie einen Fußteil 13 bzw. 14. Der Lagerteil 12 des zweiten Flanschmitnehmers 8 dient dabei der Abstützung und Aufnahme der eine gemeinsame durch die Zapfenachse Z1 der in der Gelenkgabel gelagerten und eine gemeinsame Symmetrieachse S_{Z1} aufweisenden Zapfen 15 und 16 des Zapfenkreuzes 6. Die zu den Zapfen 15 und 16 jeweils um 90 in Umfangsrichtung versetzt angeordneten und durch die Zapfenachse Z2 beschreibbaren Zapfen werden im Flanschmitnehmer 7 gelagert, sind jedoch hier nicht dargestellt. Die Vorrichtung 5 zur Begrenzung des Beugewinkels 6 ist dabei zwischen den zueinander weisenden Flanschmitnehmern 7 und 8 der Gelenkwellenverbindung 1 zum Zwecke der Fixierung der Lagen von Flanschmitnehmer 7, Flanschmitnehmer 8 und gegenüber dem Zapfenkreuz 6 sowie gegeneinander. Dies dient der Vermeidung der Bewegbarkeit der Gelenkgabeln jeweils um die entsprechenden Zapfenachsen Z₁ und Z₂ der im jeweiligen Flanschmitnehmer 7 oder 8 gelagerten Zapfen des Zapfenkreuzes 6. Die Vorrichtung zur Begrenzung der Beugewinkels 5 umfaßt dazu eine Halteeinrichtung 17 und eine Stelleinrichtung 18. Die Halteeinrichtung 17 umfaßt einen senkrecht zum Schnittpunkt der beiden Zapfenachsen Z₁ und Z₂ der Kreuzgelenkanordnung 4 verschiebbar geführten Stempel 19, welcher mit einer Gegenfläche 20 an einem der beiden Flanschmitnehmer 7 oder 8 formschlüssig in Wirkverbindung treten kann. Der Stempel 19 ist zu diesem Zweck verschiebbar im Zapfenkreuz 6 gelagert. Die Abstützung bzw. Beaufschlagung des Stempels 19 mit einer entsprechender Verschiebungskraft erfolgt über die Stelleinrichtung 18. Diese ist dem, die Gegenfläche 20 tragenden Flanschmitnehmer 7 oder 8 gegenüber liegenden Flanschmitnehmer 8 oder 7 gelagert. Im dargestellen Fall ist die Stelleinrichtung 18 am Flanschmitnehmer 8 und die Gegenfläche 20 am Flanschmitnehmer 7, insbesondere im Bereich der jeweiligen Fußteile 14 bzw. 13 ausgebildet bzw. angeordnet. Der Stempel 19, der bezüglich seiner Bewegbarkeit durch die Verschiebbarkeit entlang einer Senkrechten S zu den einzelnen Zapfen Z₁ und Z₂ des Kreuzgelenkes 4 beschreibbar ist, wobei die Senkrechte S durch den Schnittpunkt S_{Z} der Zapfenachsen Z₁ und Z₂ des Zapfenkreuzes bzw. bei Anordnung der Zapfenachsen in zueinander parallelen Ebenen dem theoretisch gebildeten Schnittpunkt bei Projizierung der Zapfenachse in eine gemeinsame Ebene charakterisiert ist, umfaßt ein außerhalb des Zapfenkreuzes 6 angeordnetes Stempelelement 21 und ein mit diesem verbundenes Bolzenelement 22, welches sich in Richtung der Senkrechten S durch das Zapfenkreuz 6 erstreckt. Das Stempelelement 21 ist dabei auf einer ersten zur Gegenfläche 20 hinweisenden Stirnseite 23 des Zapfenkreuz 6 angeordnet, während das Bolzenelement 20 durch das Zapfenkreuz 6 hindurchgeführt und in diesem verschiebbar gelagert ist. Vorzugsweise ist an der von der ersten zur Gegenfläche 20 hinweisenden Stirnseite 23 weggerichteten Stirnseite 24 eine Halterung 25 angeordnet. Diese Halterung 25 dient dabei der Lagefixierung des Stempels 19 im Nichtfunktionszustand, d.h. bei Nichtblockierung der Bewegbarkeit der beiden Flanschmitnehmer 7 und 8 gegeneinander. Zu diesem Zweck umfaßt das Bolzenelement 22 neben einem ersten, durch das Zapfenkreuz 6 geführten Bolzenteil 26 einen zweiten Bolzenteil 27 größeren Durchmessers, der mit dem ersten Bolzenteil fest verbunden ist und sich über eine Federeinrichtung 28 an der zweiten Stirnseite 24 des Zapfenkreuzes 6 abstützt. An dem Bolzenelement 22 greift die Stelleinrichtung 18 an. Die Stelleinrichtung 18 umfaßt eine Zylinder-/Kolbeneinrichtung 29, welche im Flanschteil 8, insbesondere im Fußteil 14 des Flanschteiles 8, gelagert ist. Die Zylinder-/Kolbeneinrichtung 29 umfaßt ein Kolbenelement 30, welches am Bolzenelement wirksam wird. Zu diesem Zweck ist das Kolbenelement 30 im Zylinder 31 in Richtung der Gelenkachse G bei Beugewinkel 0 verschiebbar gelagert. Die Betätigung der Zylinder-/Kolbeneinrichtung 29 kann unterschiedlich erfolgen. Vorzugsweise handelt es sich bei der Zylinder-/Kolbeneinrichtung 29 um einen Hydraulikzylinder, bei welchem die zur Verschiebung des Kolbenelementes 30 erforderliche Kraft über Druckmittel aufgebracht wird. Die zur Beaufschlagung des Kolbenelementes 30 zur Verschiebung des Bolzenelementes 22 erforderliche Kraft kann auch elektrisch, pneumatisch, mechanisch oder elektromagnetisch aufgebracht werden. Da beim Einsatz von Gelenkwellen in den Antriebssystemen ohnehin Hydrauliksysteme vorhanden sind, erfolgt die Beaufschlagung bzw. Erzeugung der erforderlichen Kraft vorzugsweise hydraulisch. Dazu bildet der Zylinder 31 eine Druckkammer 32, in welcher das Kolbenelement dicht geführt ist. Die Druckkammer 32 ist über mindestens eine Verbindungsleitung 33 mit einer Einrichtung 34 zur Versorgung mit Druckmittel, welches vorzugsweise im Bereich des Außenumfanges 35 des Flanschmitnehmers 8 angeordnet ist, verbunden. Denkbar ist es auch, daß im Außenumfang eine Mehrzahl von Einrichtungen zur Versorgung mit Druckmittel 34 vorgesehen werden.

Das Stempelelement 21 weist an seiner von dem Zapfenkreuz weggerichteten und zur Gegenfläche 20 ausgerichteten Stirnseite 36 eine Klemm- oder Krallenfläche 37 zur Realisierung des Formschlusses auf. Die Stirnseite 36 bzw. der die Klemm- oder Krallenfläche 37 tragende Bereich der Stirnseite 36, im dargestellten Fall die gesamte Stirnseite 36, ist zu diesem Zwecke gekrümmt ausgeführt. Die Krümmung ist im dargestellten Fall konvex ausgeführt, d.h., das Stempelelement 21 ist zur Gegenfläche 20 hin gewölbt ausgeführt. Die Gegenfläche 20 ist an einer zum Stempel 19 hinweisenden Stirnfläche 38 am Fußteil 13 des Flanschmitnehmers 7 entweder direkt am Flanschmitnehmer 7, insbesondere Fußteil 13 ausgebildet, d.h. wird bei Herstellung des Flanschmitnehmers 7 mitberücksichtigt oder wird von einem an einem ortsfest, d.h. drehfest und in axialer Richtung nicht verschiebbar mit dem Fußteil 13 des Flanschmänehmers 7 verbundenen Bauelement 39 gebildet. Die Gegenfläche 20 ist im dargestellten Fall konvex ausgeführt. Die Krümmungsflächen, d.h. die Gegenfläche 20 und die entsprechend ausgestaltete Stirnseite 36 bzw. der Teilbereich sind zueinander um 90 gedreht angeordnet. Zur Realisierung des Formschlusses tragen beide eine zueinander komplementäre Verzahnung. Dabei bestehen bezüglich der den Formschluß bildenden Elemente, Stempelelement 21 und Bauelemente 39 beziehungweise Gegenfläche 20 bezüglich der Materialpaarungen eine Vielzahl von Möglichkeiten. Da das Bauelement 39 in der Regel leicht austauschbar ist, kann dieses beispielsweise aus Sphärenguß als Verschleißteil hergestellt werden und somit eine Paarung zwischen Gegenfläche 20 und Stempelelement 21 herbeigeführt werden, welche auch als Weich-/Hart-Paarung bezeichnet wird. Dabei kann im Funktionszustand der Vorrichtung 5 zur Begrenzung des Beugewinkels bzw. zum Halten der beiden Flanschmltnehmer 7 und 8 in einer bestimmten Lage zueinander zwischen Stempel 19 und Gegenfläche 20 eine plastische oder elastische Verformung angestrebt werden. Bei plastischer Verformung ist es dabei erforderlich, jeweils das entsprechende Verschlelßteil, vorzugsweise das Bauelement 39 zu wechseln. Im anderen Fall ist zu berücksichtigen, wieviele Verspannvorgänge unter Beibehaltung der vollen Funktionstätigkeit möglich sind.

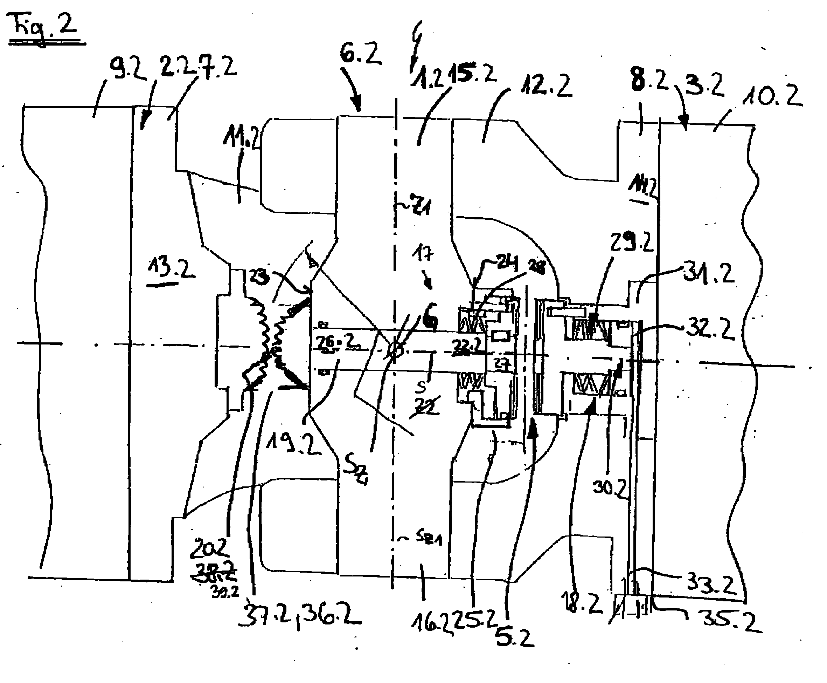

Die in der Figur 1 dargestellte Ausführung, weiche durch die konvexe Ausführung des Stempeleiementes 21 und der konvexe Ausführung der Gegenfläche 20 am Bauelement 39 charakterisiert ist, stellt eine mögliche vorteilhafte Ausgestaltung dar. Denkbar ist es jedoch auch, die miteinander formschlüssig in Wirkverbindung tretbaren Flächenbereiche am Stempelelement 21 und am Bauelement 39 hinsichtlich ihrer Krümmung zu vertauschen, wie in Figur 2 dargestellt. Bei dieser Ausführung weist die am Bauelement 39.2 angeordnete Gegenfläche 20.2 im Querschnitt betrachtet einen konvexe Verlauf auf, während am Stempelelement 21.2 die Stirnseite 36.2 ebenfalls konvex ausgeführt ist. Der Grundaufbau entspricht im übrigen dem in der Figur 1 beschriebenen, weshalb für gleiche Elemente die gleichen Bezugszeichen verwendet werden und im einzelnen nicht mehr näher darauf eingegangen wird.

Die Vorrichtung 5 ist durch zwei Funktionszustände gekennzeichnet. Ein erster Funktionszustand ist dabei dadurch charakterisiert, daß keine Verspannung und damit keine Lagefixierung zwischen den ein Zapfenkreuz 6 abstützenden Flanschmitnehmem 7 und 8 erfolgt. In diesem Fall besteht keine Wirkverbindung zwischen dem Stempelelement 21, insbesondere der Stirnseite 36 und der Gegenfläche 20 am zum Stempelelement 21 ausgerichteten Fußtell 13 des Flanschmitnehmers 7. Des weiteren ist in diesem Zustand die Stelleinrichtung 18 nicht an der Halteeinrichtung 17, d.h. dem Bolzenelement 22 wirksam. Im zweiten Funktionszustand, der durch die Lagefixierung zwischen den einzelnen Flanschmitnehmer 7 und 8 zueinander bestimmt ist, ist die Vorrichtung 5 betätigt. In diesem Fall wird die Zylinder-/Kolbeneinrichtung 29 betätigt und mittels dem Kolbenelement 30 eine entsprechende Kraft auf das Bolzenelement 22 aufgebracht, welches eine Verschiebung gegen die Federeinrichtung 28 im Zapfenkreuz 6 erfährt und damit das Stempelelement 21 gegen die Gegenfläche 20 am Fußteil 13 des anderen Flanschmitnehmers 7 preßt. Der Formschluß wird dabei durch die über die Zylinder-/Kolbeneinrichtung 29 aufgebrachte Kraft aufrecht erhalten. Um eine sichere Funktionsweise zu gewährleisten ist es jedoch erforderlich, daß der Stempel 19 in Umfangsrichtung gegenüber dem Zapfenkreuz 6 gegen Verdrehung gesichert ist. Dazu sind entsprechende Mittel 40 zur Verdrehsicherung vorgesehen, welche vorzugsweise über die Halterung 25 realisiert werden.

Die Realisierung des Formschlusses über gekrümmte Flächen bietet den Vorteil einer mit minimalen Aufwand realisierbaren und hinsichtlich der Belastung auch höchsten Beanspruchungen standhaltenden Wirkverbindung zur Lagefixierung zweier Flanschmitnehmer gegeneinander in allen möglichen Richtungen um die entsprechenden Zapfenachsen Z₁ und Z₂ der in beiden Gelenkgabelhälften gelagerten Zapfen eines Zapfenkreuzes. Die erfindungsgemäße Lösung ist nicht auf Ausführungen mit einteiligen Zapfenkreuzen beschränkt. Denkbar ist auch eine Anwendung in Zapfenkreuzen, die durch Zapfenachsen charakterisiert sind, welche in zueinander beabstandeten, jedoch parallelen Ebenen angeordnet sind. Diesbezüglich ist es lediglich erforderlich, bei der Herstellung der einzelnen Elemente des Zapfenkreuzes die entsprechenden Führungen für die Elemente der Vorrichtung 5 zu berücksichtigen.

Die Vorrichtung 5 bzw. deren Einzelelemente sind im Bereich der theoretischen Gelenkachse der Gelenkwellenverbindung 1 bei Beugewinkel 0 angeordnet. Lagerabweichungen aufgrund von Toleranzen sind möglich und nicht kritisch. Des weiteren ist es auch denkbar, daß bei entsprechend großen gestalteten Zapfenkreuzen eine geringfügig außermittige Lage vorgesehen werden kann. Vorzugsweise umfaßt die Vorrichtung 5 nur einen Stempel 19 und eine Stelleinrichtung 18. Es ist jedoch denkbar, bei sehr großen Zapfenkreuzen 6 zwei Vorrichtungen 5 vorzusehen, wobei diese versetzt zur Gelenkachse G und parallel zueinander angeordnet sind. Aus fertigungstechnischen Gesichtspunkten ist jedoch eine Ausführung mit nur einer Vorrichtung 5 vorzuziehen.

Bezugszeichenliste
- 1, 1.2: Gelenkwellenverbindung
- 2, 2.2: erste Gelenkwelle
- 3, 3.2: zweite Gelenkwelle
- 4, 4.2: Kreuzgelenk
- 5, 5.2: Vorrichtung zur Begrenzung des Beugewinkels
- 6, 6.2: Zapfenkreuz
- 7, 7.2: erster Flanschmitnehmer
- 8, 8.2: zweiter Flanschmitnehmer
- 9, 9.2: mit dem Flanschmitnehmer 7 gekoppelter Wellenstrang
- 10, 10.2: mit dem Flanschmitnehmer 8 gekoppelter Wellenstrang
- 11, 11.2: Lagerteil des Flanschmitnehmers 7
- 12, 12.2: Lagerteil des Flanschmitnehmers 8
- 13, 13.2: Fußteil des Flanschmitnehmers 7
- 14, 14.2: Fußteil des Flanschmitnehmers 8
- 15, 15.2: Zapfen
- 16, 16.2: Zapfen
- 17, 17.2: Halteeinrichtung
- 18, 18.2: Stelleinrichtung
- 19, 19.2: Stempel
- 20, 20.2: Gegenfläche
- 21, 21.2: Stempelelement
- 22, 22.2: Bolzenelement
- 23, 23.2: erste zur Gegenfläche 20 hinweisende Stirnseite des Zapfenkreuzes 6
- 24, 24.2: zweite Stirnseite des Zapfenkreuzes 6
- 25, 25.2: Halterung
- 26, 26.2: erstes Bolzenteil
- 27, 27.2: zweites Bolzenteil
- 28, 28.2: Federeinrichtung
- 29, 29.2: Zylinder-/Kolbeneinrichtung
- 30, 30.2: Kolbenelement
- 31, 31.2: Zylinder
- 32, 32.2: Druckkammer
- 33, 33.2: Verbindungsleitung
- 34, 34.2: Einrichtung zur Versorgung mit Druckmittel
- 35, 35.2: Außenumfang
- 36, 36.2: Stirnseite des Stempelelementes
- 37, 37.2: Klemm- oder Krallenfläche
- 38, 38.2: Stirnfläche
- 39, 39.2: Bauelement
- 40: Mittel zur Verdrehsicherung
- Z₁: erste Zapfenachse
- Z₂: zweite Zapfenachse
- S_{Z1}: Symmetrieachse
- S: Senkrechte zu beiden Zapfenachsen durch den Schnittpunkt beider Zapfenachsen
- G: Gelenkachse

## Patentansprüche

1. Gelenkwellenverbindung (1) zwischen zwei Wellensträngen, einem ersten Wellenstrang und einem zweiten Wellenstrang (2, 3);
jedem Wellenstrang (2, 3) ist ein Flanschmitnehmer (7, 8), umfassend ein Lagerteil (11, 12) und ein Fußteil (13, 14) zur Lagerung eines Zapfenkreuzes (6) zugeordnet;
mit einer Vorrichtung (5) zur Begrenzung des Beugewinkels;
die Vorrichtung (5) umfasst eine Halteeinrichtung (17) und eine Stelleinrichtung (18);
die Halteeinrichtung (17) umfasst einen im Zapfenkreuz (6) verschiebbar gelagerten Stempel (19), welcher formschlüssig mit einer, an einem ersten der beiden Flanschmitnehmer (7 oder 8) angeordneten Gegenfläche (20) in Wirkverbindung zur Lagefixierung in axialer und radialer Richtung zwischen Zapfenkreuz (6) und Flanschmitnehmer (7 oder 8) tritt;
die Stelleinrichtung (18) ist am anderen zweiten Flanschmitnehmer (8 oder 7) gelagert;
**gekennzeichnet durch** folgende Merkmale:
der Stempel (19), ist derart geführt, dass dieser bezüglich seiner Bewegbarkeit ausschließlich **durch** die Verschiebbarkeit entlang einer Senkrechten (S) zu den einzelnen Zapfenachsen (Z1, Z2) beschreibbar ist, wobei die Senkrechte (S) **durch** den Schnittpunkt (SZ) der Zapfenachsen (Z1, Z2) und bei Anordnung der Zapfenachsen in zueinander parallelen Ebenen **durch** den theoretisch gebildeten Schnittpunkt bei Projizierung der Zapfenachsen (Z1, Z2) in eine gemeinsame Ebene, verläuft.

2. Gelenkwellenverbindung (1) nach Anspruch 1, **gekennzeichnet durch** die folgenden Merkmale;
der Stempel (19) umfasst ein Bolzenelement (22) und ein fest mit diesem verbundenes Stempelelement (21, 21.2);
die formschlüssige Verbindung zwischen der Gegenfläche (20) wird **durch** eine gekrümmte Ausgestaltung der Gegenfläche (20) und eine dazu komplementäre Fläche (36, 36.2) am Stempel realisiert;
an der Gegenfläche (20) und der zur Gegenfläche (20) gerichteten Stirnseite (36, 36.2) am Stempel (19) sind jeweils zueinander komplementäre Verzahnungen angeordnet.

3. Gelenkwellenverbindung (1) nach Anspruch 2, **gekennzeichnet durch** die folgenden Merkmale:
die zur Gegenfläche (20) hinweisende und mit dieser in Wirkverbindung tretende Stirnseite (36, 36.2) des Stempelelementes (21, 21.2) ist konvex ausgeführt;
die Gegenfläche (20) ist konkav ausgeführt.

4. Gelenkwellenverbindung (1) nach Anspruch 2, **gekennzeichnet durch** die folgenden Merkmale:
die zur Gegenfläche (20) hinweisende und mit dieser in Wirkverbindung tretende Stirnseite (36, 36.2) des Stempelelementes (21, 21.2) ist konvex ausgeführt;
die Gegenfläche (20) ist konvex ausgeführt.

5. Gelenkwellenwerbindung (1) nach einem der Ansprüche 2 bis 4, **dadurch gekennzeichnet, daß** die zueinander komplementäre Verzahnung an der Gegenfläche (20) und der zur Gegenfläche weisenden Stirnfläche (36, 36.2) am Stempelelement durch mindestens zwei Zahnungsbereiche charakterisiert ist, wobei die Flankenlinienverläufe zwischen den beiden Bereichen durch einen Winkel zueinander charakterisiert sind.

6. Gelenkwellenverbindung (1) nach einem der Ansprüche 2 bis 5, **dadurch gekennzeichnet, daß** die Verzahnung als Geradverzahnung ausgeführt ist.

7. Gelenkwelfenverbindung (1) nach einem der Ansprüche 2 bis 5, **dadurch gekennzeichnet, daß** die Verzahnung als Schrägverzahnung ausgeführt ist.

8. Gelenkwellenverbindung (1) nach einem der Ansprüche 1 bis 7, **dadurch gekennzeichnet, daß** die Gegenfläche (20) am Fußteil (13, 14) eingearbeitet ist.

9. Gelenkwellenverbindung (1) nach einem der Ansprüche 1 bis 7, **dadurch gekennzeichnet, daß** die Gegenfläche (20) an einem separaten, lösbar mit dem Fußteil (13, 14) des Flanschmitnehmers (7, 8) verbundenen Bauelement (39) angeordnet ist.

10. Gelenkwellenverbindung (1) nach Anspruch 9, **dadurch gekennzeichnet, daß** das Bauelement (39) und das Stempelelement (21, 21.2) eine Paarung weich/hart bilden.

11. Gelenkwellenverbindung (1) nach Anspruch 10, **dadurch gekennzeichnet, daß** das Stempelelement (21, 21.2) aus Sphärenguß besteht und das lösbar mit dem Flanschmitnehmer verbundene Bauelement (39) aus Metall oder Kunststoff gefertigt ist.

12. Gelenkwellenverbindung nach einem der Ansprüche 1 bis 11, **dadurch gekennzeichnet, daß** der Stempel (19) vorspannbar im Zapfenkreuz (6) gelagert ist.

13. Gelenkwellenverbindung (1) nach Anspruch 12, **dadurch gekennzeichnet, daß** der Stempel (19) ein Bolzenelement (22) umfaßt, welches aus einem ersten, durch das Zapfenkreuz (6) geführten Bolzenteil (26) und einem zweiten Bolzenteil (27) größeren Durchmessers, welcher mit dem ersten Bolzenteil (26) fest verbunden ist, und sich über eine Federeinrichtung (28) an einer von der Gegenfläche (20) abgewandten Stirnseite (24) des Zapfenkreuzes (6) abstützt.

14. Gelenkwellenverbindung (1) nach einem der Ansprüche 1 bis 13, **dadurch gekennzeichnet, daß** der Stempel (19) beziehungsweise die einzelnen Bauteile des Stempels (19) mittels Mitteln (40) zur Verdrehsicherung gegenüber Verdrehung gesichert sind.

15. Gelenkwellenverbindung (1) nach einem der Ansprüche 1 bis 14, **dadurch gekennzeichnet, daß** die Stelleinrichtung (19) pneumatisch/mechanisch arbeitet.

16. Gelenkwellenverbindung (1) nach einem der Ansprüche 1 bis 14, **dadurch gekennzeichnet, daß** die Stelleinrichtung (19) hydraulisch/mechanisch arbeitet.

17. Gelenkwellenverbindung (1) nach einem der Ansprüche 15 oder 16, **gekennzeichnet durch** die folgenden Merkmale:
die Stelleinrichtung (18) umfaßt eine Zylinder-/Kolbeneinrichturig (29), der eine Druckmittelquelle zur Beaufschlagung des Kolbens (30) der Zylinder-/Kolbeneinrichtung (29) zugeordnet ist;
die Druckmittelquelle umfaßt eine Einrichtung (34) zur Versorgung mit Druckmittel und mindestens eine Verbindungsleitung (33) zwischen der Einrichtung (34) und mindestens einer Druckkammer (32) zur Beaufschlagung des Kolbenelementes (30) der Zylinder-/Kolbeneinrichtung (29).

18. Gelenkwellenverbindung (1) nach Anspruch 17, **dadurch gekennzeichnet, daß** die Einrichtung (34) zur Versorgung mit Druckmittel außerhalb des Flanschmitnehmers angeordnet oder anordenbar ist.

19. Gelenkwellenverbindung (1) nach Anspruch 17, **dadurch gekennzeichnet, daß** die Einrichtung (34) zur Versorgung mit Druckmittel in einem Wellenstrang integriert ist.

20. Gelenkwellenverbindung (1) nach einem der Ansprüche 1 bis 14, **dadurch gekennzeichnet, daß** die Stelleinrichtung (18) eine Zylinder-/Kolbeneinheit umfaßt, und eine, dieser zugeordnete elektro-magnetische Betätigungseinrichtung.

## Claims

1. A universal joint shaft connection (1) between two shaftings, a first shafting and a second shafting (2, 3), each shafting (2, 3) being associated with a flange yoke (7, 8) comprising a bearing part (11, 12) and a base part (13, 14) for holding a journal cross (6), with an apparatus (5) for delimiting the articulation angle, the apparatus (5) comprising a holding device (17) and an actuating device (18), the holding device (17) comprising a ram (19) which is held in a displaceable manner in the journal cross (6) and which enters in an interlocking manner into an operative connection with a counter-surface (20) arranged on a first one of the two flange yokes (7 or 8) for the purpose of fixing the position in axial and radial direction between the journal cross (6) and flange yoke (7 or 8), the actuating device (18) being held on the other second flange yoke (8 or 7), **characterized by** the following features:
the ram (19) is guided in such a way that the same can be described in respect of its mobility exclusively by displaceability along a perpendicular (S) in relation to the individual journal axes (Z1, Z2), with the perpendicular (S) extending through the point of intersection (SZ) of the journal axes (Z1, Z2) and, in the case of arrangement of the journal axes in mutually parallel planes, through the theoretically formed point of intersection when projecting the journals axes (Z1, Z2) in a common plane.

2. A universal joint shaft connection according to claim 1, **characterized by** the following features:
the ram (19) comprises a pin element (22) and a ram element (21, 21.2) which is rigidly connected with the said pin element, the interlocking connection between the counter-surface (20) is realized by a curved arrangement of the counter-surface (20) and a surface (36, 36.2) which is complementary thereto, mutually complementary toothed portions are arranged on the counter-surface (20) of the face (36, 36.2) on the ram (19)
which faces the counter-surface (20).

3. A universal joint shaft connection (1) according to claim 2, **characterized** b the following features:
the face (36, 36.2) of the ram element (21, 21.2) which faces the counter-surface (20) and is in operative connection with the same is provided with a convex arrangement, and the counter-surface (20) is arranged in a concave manner.

4. A universal joint shaft connection (1) according to claim 2, **characterized by** the following features:
the face (36, 36.2) of the ram element (21, 21.2) which faces the counter-surface (20) and is in operative connection with the same is provided with a convex arrangement, and the counter-surface (20) is arranged in a convex manner.

5. A universal joint shaft connection (1) according to one of the claims 2 to 4, **characterized in that** the mutually complementary toothing on the counter-surface (20) and the face surface (36, 36.2) on the ram element which faces the counter-surface is **characterized by** at least two toothing regions, with the tooth trace progressions between the two regions being **characterized by** an angle with respect to one another.

6. A universal joint shaft connection (1) according to one of the claims 2 to 5, **characterized in that** the toothing is arranged as a spur toothing.

7. A universal joint shaft connection (1) according to one of the claims 2 to 5, **characterized in that** the toothing is arranged as a helical toothing.

8. A universal joint shaft connection (1) according to one of the claims 1 to 7, **characterized in that** the counter-surface (20) is incorporated in the base part (13, 14).

9. A universal joint shaft connection (1) according to one of the claims 1 to 7, **characterized in that** the counter-surface (20) is arranged on a separate component (39) which is connected in a detachable manner with the base part (13, 14) of the flange yoke (7, 8).

10. A universal joint shaft connection (1) according to claim 9, **characterized in that** the component (39) and the ram element (21, 21.2) form a pairing soft/hard.

11. A universal joint shaft connection (1) according to claim 10, **characterized in that** the ram element (21, 21.2) consists of spheroidal iron and the component (39) which is detachably connected with the flange yoke is made of metal or plastic.

12. A universal joint shaft connection (1) according to one of the claims 1 to 11, **characterized in that** the ram (19) is held in a pretensionable manner in the journal cross (6).

13. A universal joint shaft connection (1) according to claim 12, **characterized in that** the ram (19) comprises a pin element (22) which consists of a first pin part (26) which is guided through the journal cross (6) and a second pin part (27) of a larger diameter which is rigidly connected with the first pin part (26) and rests via a spring device (28) on a face (24) of the journal cross (6) which is averted from the counter-surface (20).

14. A universal joint shaft connection (1) according to one of the claims 1 to 13, **characterized in that** the ram (19) or the individual components of the ram (19) are secured against twisting by anti-rotation means (40).

15. A universal joint shaft connection (1) according to one of the claims 1 to 14, **characterized in that** the actuating device (19) works pneumatically/mechanically.

16. A universal joint shaft connection (1) according to one of the claims 1 to 14, **characterized in that** the actuating device (19) works hydraulically/mechanically.

17. A universal joint shaft connection (1) according to one of the claims 15 or 16, **characterized by** the following features:
the actuating device (18) comprises a cylinder/piston device (29) which is associated with a pressure medium source for pressurizing the piston (30) of the cylinder/piston device (29), the pressure medium source comprises a device (34) for supply with pressure medium and at least one connecting line (33) between the device (34) and at least one pressure chamber (32) for pressurizing the piston element (30) of the cylinder/piston device (29).

18. A universal joint shaft connection (1) according to claim 17, **characterized in that** the device (34) for supply with pressure medium is arranged or can be arranged outside of the flange yoke.

19. A universal joint shaft connection (1) according to claim 17, **characterized in that** the device (34) for supply with pressure medium is integrated in a shafting.

20. A universal joint shaft connection (1) according to one of the claims 1 to 14, **characterized in that** the actuating device (18) comprises a cylinder/piston unit and an electro-magnetic actuating device associated with the same.

## Revendications

1. Assemblage d'arbres articulés (1) entre deux lignes d'arbres, une première ligne d'arbres et une deuxième ligne d'arbres (2, 3) ;
chaque ligne d'arbres (2, 3) est associée à un entraîneur à bride (7, 8) comprenant une partie de palier (11, 12) et une partie de pied (13, 14) destinée à supporter un croisillon (6) ;
avec un mécanisme (5) pour limiter l'angle de flexion ;
le mécanisme (5) comprend un dispositif de maintien (17) et un dispositif de réglage (18) ;
le dispositif de maintien (17) comprend un piston (19) supporté avec possibilité de déplacement dans le croisillon (6), qui vient en liaison active par correspondance de forme avec une surface opposée (20) disposée sur un premier des deux entraîneurs à bride (7 ou 8) pour fixer la position dans le sens axial et radial entre le croisillon (6) et l'entraîneur à bride (7 ou 8) ;
le dispositif de réglage (18) est supporté sur le deuxième entraîneur à bride (8 ou 7) ;
**caractérisé en ce que** le piston (19) est guidé de telle manière que sa mobilité peut être décrite exclusivement par la mobilité le long d'une perpendiculaire (S) aux différents axes de tourillon (Z1, Z2), la perpendiculaire (S) passant par l'intersection (SZ) des axes de tourillon (Z1, Z2) et, lorsque les axes de tourillon sont disposés dans des plans parallèles l'un à l'autre, par l'intersection théorique en cas de projection des axes de tourillon (Z1, Z2) dans un même plan.

2. Assemblage d'arbres articulés (1) selon la revendication 1, **caractérisé en ce que** :
le piston (19) comprend un élément de boulon (22) et un élément de piston (21, 21.2) relié de façon fixe à celui-ci ;
l'assemblage en correspondance de forme entre la surface opposée (20) est réalisé par une forme courbée de la surface opposée (20) et une surface (36, 36.2) complémentaire de celle-ci sur le piston ;
des dentures complémentaires sont prévues sur la surface opposée (20) et la face d'extrémité (36, 36.2) orientée vers la surface opposée (20) du piston (19).

3. Assemblage d'arbres articulés (1) selon la revendication 2, **caractérisé en ce que** :
la face d'extrémité (36, 36.2) de l'élément de piston (21, 21.2) tournée vers la surface opposée (20) et venant en liaison active avec celle-ci est convexe ;
la surface opposée (20) est concave.

4. Assemblage d'arbres articulés (1) selon la revendication 2, **caractérisé en ce que** :
la face d'extrémité (36, 36.2) de l'élément de piston (21, 21.2) tournée vers la surface opposée (20) et venant en liaison active avec celle-ci est convexe ;
la surface opposée (20) est convexe.

5. Assemblage d'arbres articulés (1) selon l'une des revendications 2 à 4, **caractérisé en ce que** les dentures complémentaires l'une de l'autre sur la surface opposée (20) et la face d'extrémité (36, 36.2) tournée vers la surface opposée sur l'élément de piston sont **caractérisées par** au moins deux zones de denture, les formes des lignes de flanc entre les deux zones étant **caractérisées par** un angle l'une par rapport à l'autre.

6. Assemblage d'arbres articulés (1) selon l'une des revendications 2 à 5, **caractérisé en ce que** la denture est réalisée comme une denture droite.

7. Assemblage d'arbres articulés (1) selon l'une des revendications 2 à 5, **caractérisé en ce que** la denture est réalisée comme une denture oblique.

8. Assemblage d'arbres articulés (1) selon l'une des revendications 1 à 7, **caractérisé en ce que** la surface opposée (20) est réalisée sur la partie de pied (13, 14).

9. Assemblage d'arbres articulés (1) selon l'une des revendications 1 à 7, **caractérisé en ce que** la surface opposée (20) est disposée sur un élément (39) séparé, relié de façon amovible à la partie de pied (13, 14) de l'entraîneur à bride (7, 8).

10. Assemblage d'arbres articulés (1) selon la revendication 9, **caractérisé en ce que** l'élément (39) et l'élément de piston (21, 21.2) forment une paire souple-dur.

11. Assemblage d'arbres articulés (1) selon la revendication 10, **caractérisé en ce que** l'élément de piston (21, 21.2) est fait de fonte à graphite sphéroïdal et l'élément (39) relié de façon amovible à l'entraîneur à bride est fait de métal ou de plastique.

12. Assemblage d'arbres articulés selon l'une des revendications 1 à 11, **caractérisé en ce que** le piston (19) est supporté dans le croisillon (6) de façon à pouvoir être précontraint.

13. Assemblage d'arbres articulés (1) selon la revendication 12, **caractérisé en ce que** le piston (19) comprend un élément de boulon (22) qui se compose d'une première partie de boulon (26) passant à travers le croisillon (6) et d'une deuxième partie de boulon (27) de plus grand diamètre, qui est reliée de façon fixe à la première partie de boulon (26) et s'appuie par l'intermédiaire d'un dispositif de ressort (28) sur une face d'extrémité (24) du croisillon (6) dirigée à l'opposé de la surface opposée (20).

14. Assemblage d'arbres articulés (1) selon l'une des revendications 1 à 13, **caractérisé en ce que** le piston (19) ou les différentes pièces du piston (19) sont fixés pour empêcher leur rotation par des moyens (40) empêchant la rotation.

15. Assemblage d'arbres articulés (1) selon l'une des revendications 1 à 14, **caractérisé en ce que** le dispositif de réglage (19) fonctionne de façon pneumatique et mécanique.

16. Assemblage d'arbres articulés (1) selon l'une des revendications 1 à 14, **caractérisé en ce que** le dispositif de réglage (19) fonctionne de façon hydraulique et mécanique.

17. Assemblage d'arbres articulés (1) selon l'une des revendications 15 ou 16, **caractérisé en ce que** :
le dispositif de réglage (18) comprend un dispositif de piston et cylindre (29), qui est associé à une source de fluide sous pression pour agir sur le piston (30) du dispositif de piston et cylindre (29) ;
la source de fluide sous pression comprend un dispositif (34) pour l'alimentation en fluide sous pression et au moins une ligne de liaison (33) entre le dispositif (34) et au moins une chambre de pression (32) pour agir sur l'élément de piston (30) du dispositif de piston et cylindre (29).

18. Assemblage d'arbres articulés (1) selon la revendication 17, **caractérisé en ce que** le dispositif (34) pour l'alimentation en fluide sous pression est disposé ou peut être disposé en dehors de l'entraîneur à bride.

19. Assemblage d'arbres articulés (1) selon la revendication 17, **caractérisé en ce que** le dispositif (34) pour l'alimentation en fluide sous pression est disposé dans une ligne d'arbres.

20. Assemblage d'arbres articulés (1) selon l'une des revendications 1 à 14, **caractérisé en ce que** le dispositif de réglage (18) comprend une unité de piston et cylindre et un dispositif d'actionnement électromagnétique associé à celui-ci.
